# EUROPÄISCHE PATENTSCHRIFT

(11) **EP 0 697 098 B1**
(45) Veröffentlichungstag und Bekanntmachung des Hinweises auf die Patenterteilung: **02.09.1998**
(21) Anmeldenummer: 94913488.6
(22) Anmeldetag: 03.05.1994
(51) Int. Cl.: G01C 23/00

(54) **VERFAHREN ZUR DARSTELLUNG VON FLUGFÜHRUNGSINFORMATIONEN**
PROCESS FOR REPRESENTING FLIGHT GUIDANCE INFORMATION
PROCEDE POUR LA REPRESENTATION D'INFORMATIONS DE GUIDAGE D'AVIONS

(30) Priorität: 05.05.1993 DE 4314811
(43) Veröffentlichungstag der Anmeldung: 21.02.1996
(73) Patentinhaber: VDO Luftfahrtgeräte Werk GmbH, D-60423 Frankfurt (DE)
(72) Erfinder: VON VIEBAHN, Harro, D-64342 Seeheim-Jugenheim (DE); BELOW, Christian, D-60435 Frankfurt am Main (DE); KLING, Heribert, D-60388 Frankfurt am Main (DE)
(74) Vertreter: Gornott, Dietmar, Dipl.-Ing.
(86) Internationale Anmeldenummer: DE9400490
(87) Internationale Veröffentlichungsnummer: WO9425828

(56) Entgegenhaltungen:
- EP-A- 0 418 558
- DE-B- 1 196 872
- GB-A- 2 107 059

## Beschreibung

Die Erfindung betrifft ein Verfahren zur Darstellung von Flugführungsinformationen eines Flugzeugs, wobei mit Hilfe einer Bildwiedergabeeinrichtung eine räumliche Darstellung des Flugraumes mit mindestens einem Horizont und der vorausberechneten Flugbahn des Flugzeugs erfolgt.

Ein solches Verfahren ist durch die deutsche Patentanmeldung DE 39 30 862 Al der Anmelderin bekanntgeworden. Es verbessert den Prozeß der Informationsvermittlung durch ein den natürlichen Sehgewohnheiten nachempfundenes Bild, so daß auch die mentale Belastung des Piloten verringert wird. Ferner stellt die verwendete Symbolik eine integrale Information dar, die die Kontrolle von Lage und Bewegung im Raum und das Einhalten von Flugbahnvorgaben und Kurzzeitnavigation ermöglicht. Die qualitativen Informationen treten bedingt durch die Darstellungsweise in den Vordergrund und werden durch die notwendigen quantitativen Anzeigen ergänzt. Eine Erleichterung der Aufgabe des Piloten wird durch eine Zusammenfassung der einzelnen für die Flugphase relevanten Informationen in einem ergonomisch günstig gestalteten Gesamtbild erreicht.

Ferner ermöglicht das bekannte Verfahren eine vorausschauende Steuerung des Flugzeugs, wobei die Folgen einer Steuereingabe direkt erkennbar sind. Mögliche unerwünschte Entwicklungen - beispielsweise ein Überziehen beim Start - können erkannt und vermieden werden, bevor sie tatsächlich eintreten. Die Zeit für Reaktionen des Piloten wird verlängert und die Sicherheit dadurch erhöht.

Aufgabe der vorliegenden Erfindung ist eine weitere Verbesserung des bekannten Verfahrens bezüglich einer noch intensiveren Informationsaufnahme.

Diese Aufgabe wird bei der Erfindung dadurch gelöst, daß die Fläche über dem Horizont, die vorzugsweise blau dargestellt ist, in Streifen verschiedener Farbtöne unterteilt ist, die parallel zum Horizont verlaufen, und daß jeder Streifen einem vorgegebenen Nickwinkel entspricht. Dabei hat es sich als vorteilhaft herausgestellt, wenn der vorgegebene Nickwinkel 10° beträgt. Dadurch wird die Rollage des Flugzeugs auch bei großen Nickwinkeln angezeigt, wenn nämlich der Boden bzw. der Horizont auf dem Bildschirm nicht mehr bzw. nur teilweise sichtbar sind. Außerdem vermittelt die Farbänderung eine weitere Information zur Größe des Nickwinkels. Dieses wird insbesondere bei einer Weiterbildung der Erfindung deutlich, bei welcher oberhalb eines vorgegebenen maximalen Nickwinkels eine Warnfarbe erscheint. Durch diese Weiterbildung erfolgt eine deutliche Warnung vor dem Überziehen des Flugzeugs.

Eine andere Weiterbildung, bei der ferner numerische Anzeigen des Nickwinkels eingeblendet sind, wobei die numerischen Anzeigen, vorzugsweise zwei, in einer gedachten Verlängerung der Ebene des Flugzeugs dargestellt sind, besteht darin, daß die Anzeigen transparent sind. Vorzugsweise ist dabei vorgesehen, daß die Anzeigen Ziffern innerhalb eines Rahmens sind, wobei der jeweilige Hintergrund (Himmel, Boden) in dem nicht von den Ziffern bedeckten Teil des Rahmens sichtbar ist.

Durch diese Weiterbildung der Erfindung wird ein Übergang vom positiven auf einen negativen Nickwinkel und umgekehrt dadurch besonders deutlich angezeigt, daß dann die den Nickwinkel anzeigende Markierung auch ihre unmittelbare Hintergrundfarbe ändert - nämlich von der Farbe des Himmels zur Farbe des Bodens.

Soll das Flugzeug innerhalb eines Sollweg-Kanals fliegen, so ist trotz der räumlichen Darstellung des Sollweg-Kanals und der voraussichtlichen Flugbahn die Höhe des Flugzeugs innerhalb des Sollweg-Kanals nicht immer mit Sicherheit zu erkennen. Gemäß einer anderen Weiterbildung der Erfindung ist daher vorgesehen, daß vertikale Ablagen von einem im Flugraum dargestellten Sollflugpfad in den senkrechten Begrenzungsflächen eines den Sollflugpfad umfassenden Sollweg-Kanals als farbliche Markierungen angezeigt werden. Vorzugsweise ist dabei vorgesehen, daß die Markierungen Linien sind, die parallel zu den Begrenzungskanten des Sollweg-Kanals verlaufen.

Ein wichtiger Vorteil des bekannten Verfahrens besteht unter anderem darin, daß deutlich sichtbar ist, wenn die vorausberechnete Flugbahn den Boden berührt. Dieses ist insbesondere der Fall, wenn bei dem bekannten Verfahren ein Schatten der die vorausberechnete Flugbahn darstellenden Symbole auf den Boden projiziert wird und dieser bei Bodenberührung mit dem Symbol selbst zusammenfällt. Zu einer weiteren Verdeutlichung des Aufsetzpunktes ist bei einer Weiterbildung der vorliegenden Erfindung vorgesehen, daß bei Zusammenfallen der Spitze der vorausberechneten Flugbahn mit ihrem Schatten das jeweilige die vorausberechnete Flugbahn darstellende Symbol die Lage des auf den Boden fallenden Schattens einnimmt. Durch ein plötzliches Umklappen des Symbols in die Ebene des Bodens gegenüber denjenigen Symbolen, die die vorausberechnete Flugbahn des noch fliegenden Flugzeugs darstellen, wird der Aufsatzpunkt besonders deutlich.

Um auf dem Boden dargestellte Objekte (Landebahn, Funkfeuer) auch unterhalb der Symbole sichtbar zu machen, ist gemäß einer anderen Weiterbildung der Erfindung vorgesehen, daß die auf den Boden projizierte vorausberechnete Flugbahn (Schatten) durchsichtig ausgeführt ist.

Die Erfindung läßt zahlreiche Ausführungsformen zu. Einige davon sind schematisch in der Zeichnung anhand mehrerer Figuren dargestellt und nachfolgend beschrieben.

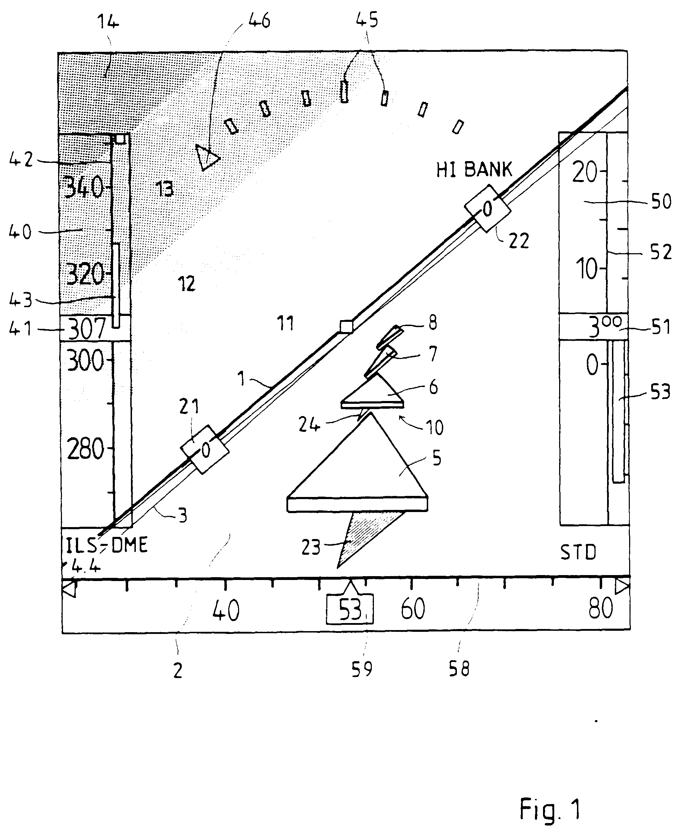

Die Figuren 1 bis 6 zeigen Schirmbilder in verschiedenen Flugsituationen zur Erläuterung des erfindungsgemäßen Verfahrens. Einrichtungen zur Durchführung des eingangs genannten bekannten Verfahrens sind bereits in der eingangs genannten Patentanmeldung erläutert. Da diese Einrichtungen auch zur Durchführung des erfindungsgemäßen Verfahrens geeignet sind, wird auf eine weitere Erläuterung im Rahmen dieser Anmeldung verzichtet.

Gleiche Teile sind in den Figuren mit gleichen Bezugszeichen versehen. Das Schirmbild ist vorzugsweise farbig. In den Figuren 1 bis 6 sind jedoch die Schirmbilder entsprechend den patentamtlichen Vorschriften als einfarbige Zeichnungen wiedergegeben. Sind bei der Erfindung Flächen in verschiedenen Farbtönen von besonderer Bedeutung, sind diese als verschieden dichte Punktraster dargestellt.

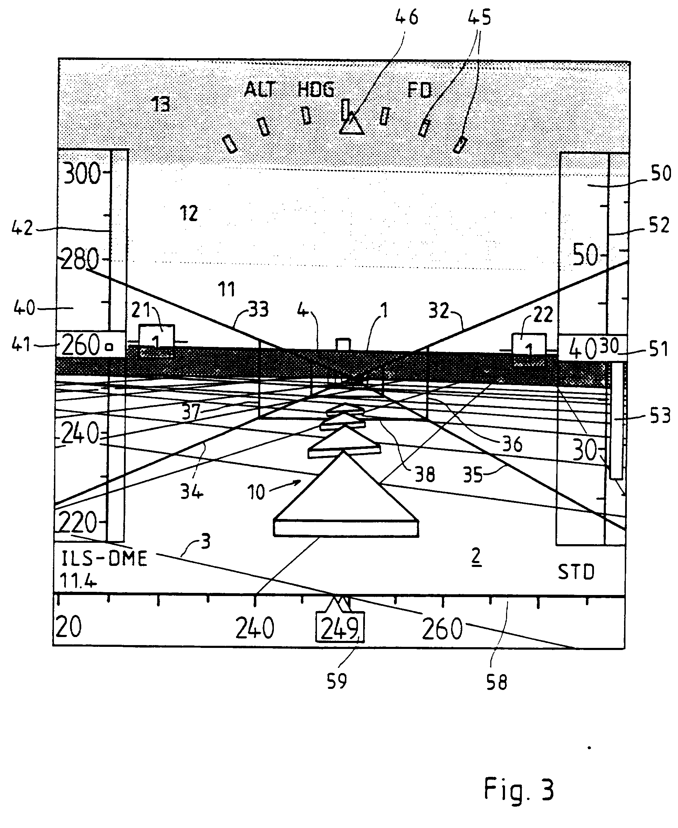

Fig. 1 zeigt ein Schirmbild, während das Flugzeug mit einer starken Rechtsneigung fliegt. Dementsprechend weist der Horizont 1 eine Schräglage auf. Der Boden (Erdoberfläche) 2 ist in dem dargestellten Beispiel eben und von einem Gitter 3 überzogen, das in Nord-Süd-Richtung, beispielsweise an den magnetischen Polen, ausgerichtet ist. Der Abstand der Gitterlinien ist vorgegeben und kann bei einer bevorzugten Ausführungsform der Erfindung zwischen einer nautischen Meile und einer geodätischen Winkelminute umgeschaltet werden. Bei der Darstellung gemäß Fig. 1 fliegt das Flugzeug sehr niedrig, so daß im Gegensatz zu den Figuren 3 bis 6 nur wenige Gitterlinien sichtbar sind.

Da bei der perspektivischen Darstellung im Bereich des Horizonts die Zahl der Gitterlinien sehr groß wird, wäre es ohne weitere Maßnahmen erforderlich, sehr viele Gitterlinien zu berechnen, die aus Gründen der Auflösung ohnehin nicht mehr dargestellt werden können. In einem Flächenbereich 4 vor dem Horizont werden deshalb keine Linien mehr berechnet und dargestellt, sondern der Flächenbereich 4 (Figuren 3 bis 6) mit einer Farbe versehen, welche an den sich aus der Farbe des Bodens und aus den enger werdenden Linien des Rasters ergebenden Farbeindruck angepaßt ist.

Bei den dargestellten Ausführungsbeispielen wird die vorausberechnete Flugbahn durch dreieckförmige Scheiben 5 bis 8 dargestellt. Dabei stellen die einzelnen Scheiben 5 bis 8 jeweils die vorausberechnete Position, die Höhe, den Kurs und die Lage des Flugzeugs dar. Die Summe der scheibenförmigen Symbole 5 bis 8, also der gesamte dargestellte Teil der vorausberechneten Flugbahn, wird im folgenden Prädiktor 10 genannt.

Zusätzlich zu den genannten Informationen erhält der Pilot einen Eindruck über die Geschwindigkeit dadurch, daß die Ausdehnung der einzelnen Symbole 5 bis 8 in Flugrichtung und damit die gesamte Länge des Prädiktors von der Geschwindigkeit abhängt. Eine weitere Geschwindigkeitsinformation wird durch die Farbe derart vermittelt, daß in einem unkritischen Geschwindigkeitsbereich die Oberflächen der Symbole eine erste Farbe, beispielsweise Grün, aufweisen, während bei Annäherung an unzulässig hohe oder unzulässig niedrige Geschwindigkeiten die Farbe derjenigen Symbole, für welche derartige Geschwindigkeiten vorausberechnet werden, eine entsprechende Warnfarbe, beispielsweise Rot und Orange, annehmen.

Da es für den Piloten letztlich interessant ist, wohin das Flugzeug fliegt, ist der Prädiktor 10 insgesamt nach dem vorausberechneten Kurs über Grund ausgerichtet. Da jedoch auch der Steuerkurs eine wichtige Information für den Piloten darstellt - insbesondere beim Landen mit Seitenwind -, ist das erste Symbol 5 des Prädiktors 10 nach dem Steuerkurs ausgerichtet.

Dadurch, daß die Symbole 5 bis 8 nicht als Flächen, sondern als Scheiben mit einer vorgegebenen Dicke dargestellt sind, ergibt sich eine wesentliche Verbesserung des räumlichen Eindrucks. Bei einem realisierten Ausführungsbeispiel sind die sichtbaren Kanten in Dunkelgrün gehalten.

Die Darstellung des Himmels erfolgt in verschiedenen zum Horizont parallelen Streifen mit jeweils unterschiedlichem Farbton. Dabei entspricht die Höhe eines Streifens jeweils einem Nickwinkel von vorzugsweise 10°. In Anlehnung an die Natur ist der Himmel Blau dargestellt, wobei ausgehend von einem blassen Hellblau am Horizont mit zunehmender Höhe das Blau dunkler bzw. intensiver wird. In Fig. 1 sind vier Streifen 11 bis 14 sichtbar.

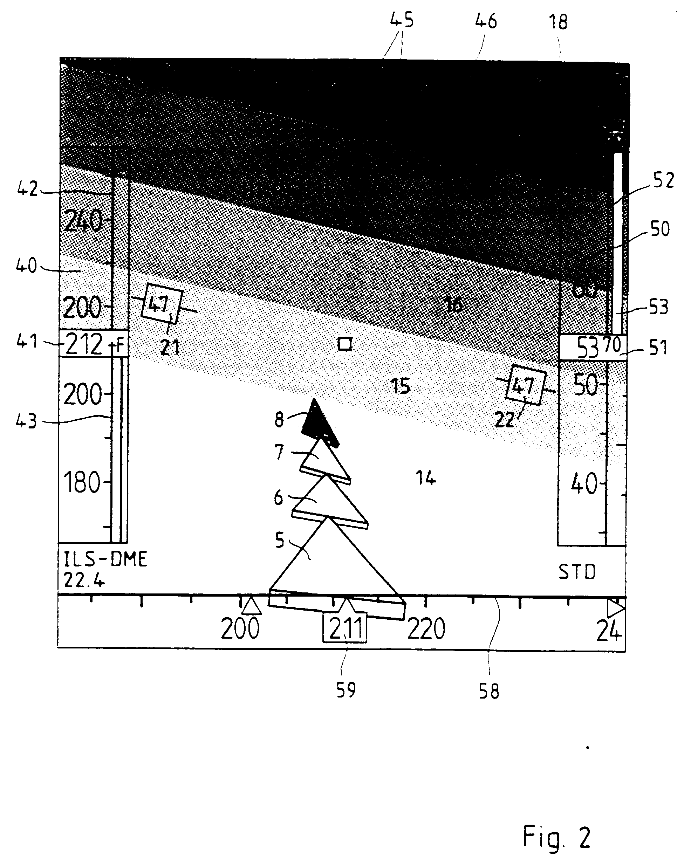

In Fig. 2 sind mehr Streifen sichtbar, nämlich die Streifen 14 bis 18, da sich das Flugzeug in einem starken Steigflug befindet, wobei der Nickwinkel 47° beträgt. Der Horizont ist nicht mehr sichtbar. Die Unterschiede zwischen den Streifen 11, 12 und 13 sind in Fig. 2 nicht dargestellt. Auch ohne einen sichtbaren Horizont erhält der Pilot grafische Informationen über den Rollwinkel (Schräge der Streifen) und über den Nickwinkel (Farbton des Himmels). Um den Nickwinkel bzw. die scheinbare Blickrichtung des Piloten bei großen Nickwinkeln noch deutlicher hervorzuheben, ist der oberste Streifen 18, der mit Nickwinkeln von über 70° korrespondiert, in einer Warnfarbe dargestellt. In Fig. 2 ist außerdem erkennbar, daß bei weiterer Erhöhung des Nickwinkels eine kritische Flugsituation eintritt, nämlich durch einen Farbumschlag des Symbols 8.

Zur Anzeige des Nickwinkels sind zwei Marken 21, 22 vorgesehen, welche einerseits durch ihre Lage gegenüber dem Horizont und andererseits numerisch den Nickwinkel angeben.

Die Marken 21, 22 sind transparent, so daß durch die Marken hindurch der Hintergrund sichtbar ist. Insbesondere im Bereich kleiner Nickwinkel, wenn der Horizont 1 durch die Marken 21, 22 hindurchtritt, wird durch einen Farbumschlag innerhalb der Marken leicht ein Vorzeichenwechsel des Nickwinkels erkennbar.

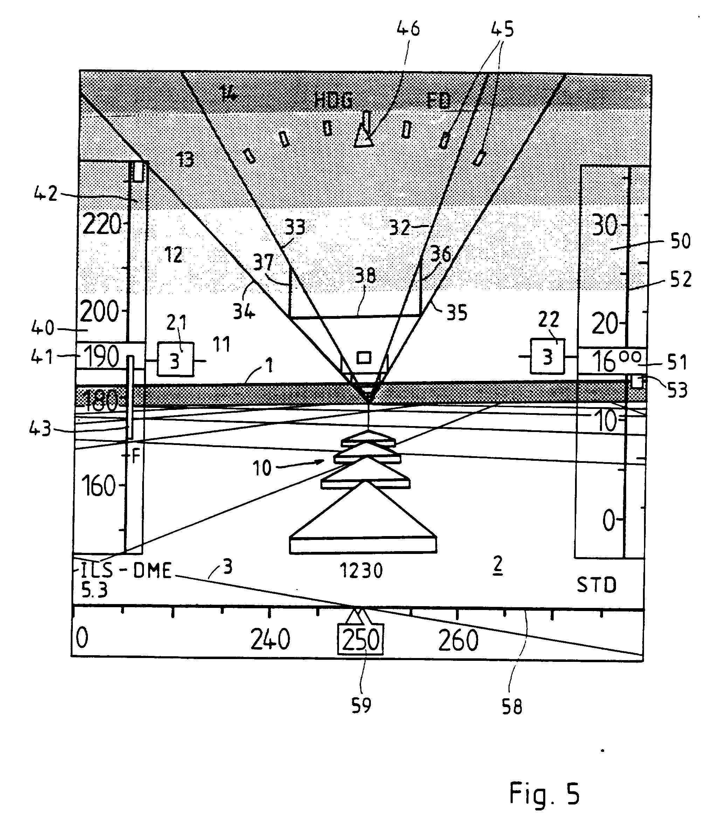

In Fig. 1 ist ferner eine weitere Ausführungsform erkennbar, daß nämlich das jeweilige Symbol, das an sich die augenblickliche (im Fall von Fig. 5) bzw. die zukünftige Lage (Symbol 6) des Flugzeugs darstellt, im Falle einer Bodenberührung in die Ebene des Bodens umklappt. Eine Bodenberührung liegt dann vor, wenn der Schatten 23, 24 eines Symbols mit diesem zusammenfällt. Bei der Darstellung nach Fig. 1 ist dieses bei den Symbolen 7 und 8 der Fall.

Im folgenden werden auf dem Schirmbild sichtbare weitere Anzeigen erläutert. Für die Geschwindigkeit ist ein Bereich 40 am linken Rand des Bildschirms vorgesehen. Dabei wird die Geschwindigkeit im Feld 41 in Knoten numerisch angezeigt. Eine senkrecht verlaufende Skala 42 wird in Abhängigkeit von der Geschwindigkeit derart verschoben, daß die numerische Anzeige über der entsprechenden Stelle der Skala gezeigt wird. Ein Balken 43 dient als Anzeige der Geschwindigkeitstendenz, die im Falle des Schirmbildes nach Fig. 1 positiv, im Falle von Fig. 2 stark negativ ist. In Fig. 2 ist neben der Skala 42 ein F in das Bild eingeblendet, um anzuzeigen, daß bei dieser Geschwindigkeit die Landeklappen auszufahren sind.

Die im oberen Teil des Bildschirms eingeblendeten Marken 45 stellen zusammen mit einem Zeiger 46 eine Rollwinkelanzeige dar. Über dem Rollwinkelanzeiger ist bei den Figuren 2 bis 6 eine Zeile mit alphanumerischen Zeichen vorgesehen, welche Informationen über den Autopiloten umfassen. Bei der in Fig. 3 dargestellten Flugsituation ist beispielsweise der Autopilot AP eingeschaltet. Ferner wird mit einem Flight director FD gearbeitet. Außerdem wird dort ein Hinweis ILS auf ein Instrumentenlandesystem für eine Landebahn O7R gegeben. Unterhalb des Rollwinkelanzeigers können Warnhinweise eingeblendet werden, beispielsweise HI BANK für einen zu großen Rollwinkel (Fig. 1) oder HI PITCH für einen zu großen Nickwinkel (Fig. 2).

In einem Bereich 50 am rechten Rand des Schirmbildes werden Informationen zur Flughöhe dargestellt. Dabei wird in einem mittleren Feld 51 die jeweilige Flughöhe in Fuß numerisch angezeigt. Eine Skala 52 verläuft senkrecht scheinbar hinter dem Feld 51 und bewegt sich in Abhängigkeit von der Flughöhe derart, daß die numerische Anzeige vor der entsprechenden Stelle der Skala erscheint. Die Länge eines vom Feld 51 ausgehenden Balkens 53 stellt die Variometeranzeige dar. Im Falle von Fig. 1 wird ein Sinken, im Falle von Fig. 2 ein Steigen des Flugzeugs angezeigt. Unterhalb des Bereichs 50 bedeutet die Buchstabenkombination STD den eingestellten Modus für den Höhenmesser.

Im unteren Bereich des Schirmbildes ist eine waagerecht verlaufende Skala 58 zur Kursanzeige vorgesehen. Wie bei der Höhen- und Geschwindigkeitsanzeige befindet sich auch bei dieser Skala ein feststehendes Feld 59, in welchem der Steuerkurs (Heading) numerisch angezeigt wird. Dazu wird die Skala 58 passend in waagerechter Richtung bewegt.

Fig. 3 zeigt ein weiteres Schirmbild, bei dem gegenüber Fig. 1 und Fig. 2 eine andere Flugsituation dargestellt ist. Diese entspricht einem Landeanflug, wobei sich das Flugzeug in einem Anflugkanal befindet, dessen Grenzen durch entsprechende Geraden dargestellt sind, von denen lediglich die Geraden 32 bis 38 mit Bezugszeichen versehen sind.

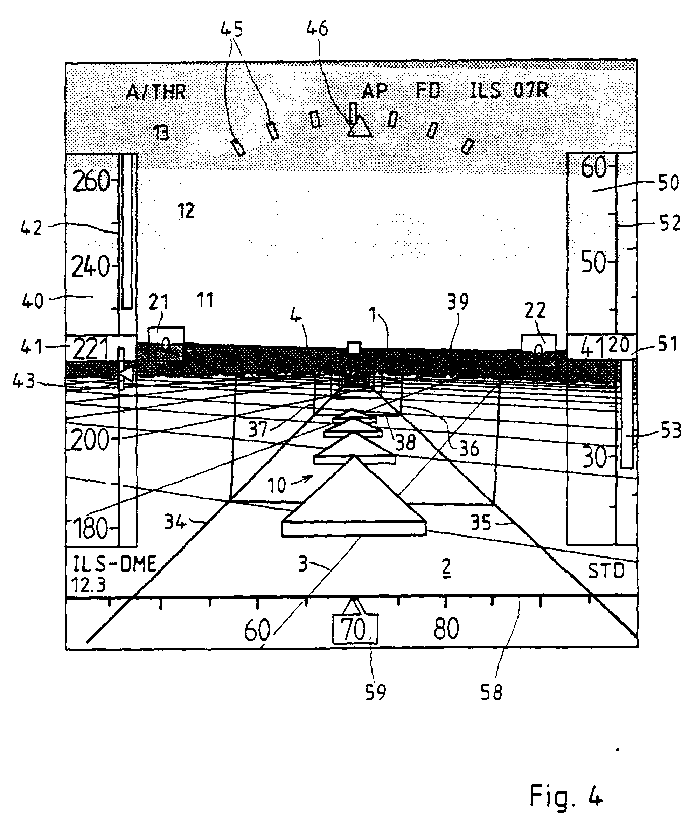

Während sich bei der Flugsituation gemäß Fig. 3 das Flugzeug innerhalb des Anflugkanals befindet, ist es in der Fig. 4 dargestellten Flugsituation zu hoch. Dieses wird dadurch hervorgehoben, daß eine den Flugkanal nach oben hin schließende Linie 39 in einer Warnfarbe dargestellt wird, was in Fig. 4 strichpunktiert hervorgehoben ist.

Bei der in Fig. 5 dargestellten Flugsituation befindet sich das Flugzeug unterhalb des Anflugkanals 32 bis 38. Dieses wird einerseits bereits durch die Ansicht des Anflugkanals von unten deutlich. Zum anderen ist es durch eine Linie ... hevorgehoben.

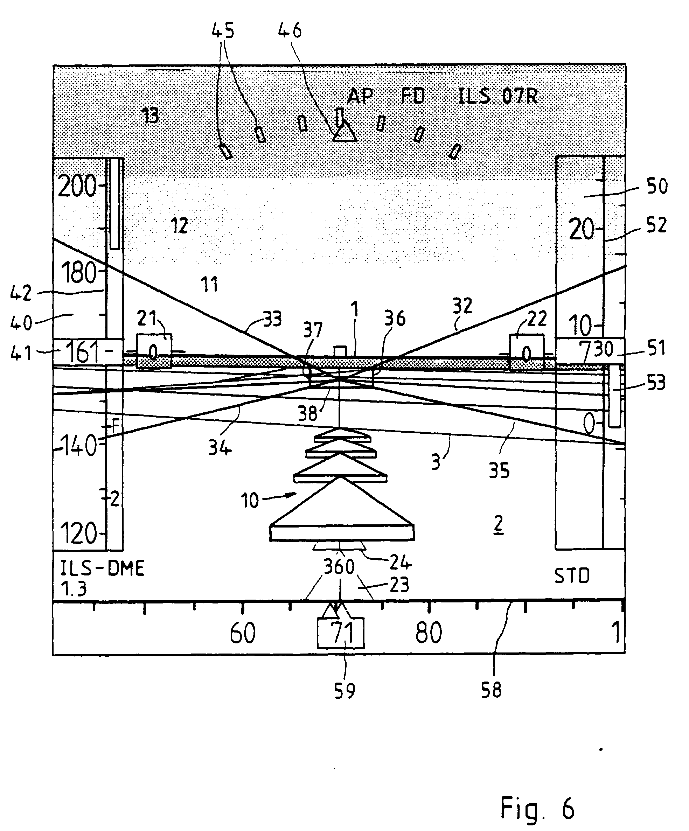

Fig. 6 zeigt eine spätere Phase des Landeanflugs, wobei sich das Flugzeug innerhalb des Anflugkanals befindet. Entsprechend der seit der Flugsituation gemäß einer der Figuren 3 bis 5 erfolgten Verringerung der Flughöhe - nämlich auf 730 Fuß werden in Fig. 6 die Schatten 23, 24 der Symbole 5, 6 sichtbar. Vorzugsweise sind die Schatten transparent ausgebildet, das heißt, die Darstellung der in den Schatten fallenden Teile des Bodens werden nicht durch die Farbe des Schattens ersetzt, sondern scheinen durch den Schatten hindurch.

## Patentansprüche

1. Verfahren zur Darstellung von Flugführungsinformationen eines Flugzeugs, wobei mit Hilfe einer Bildwiedergabeeinrichtung eine räumliche Darstellung des Flugraumes mit mindestens einem Horizont (1) und der vorausberechneten Flugbahn (10) des Flugzeugs erfolgt, dadurch gekennzeichnet, daß die Fläche über dem Horizont (10), die vorzugsweise blau dargestellt ist, in Streifen (11 bis 18) verschiedener Farbtöne unterteilt ist, die parallel zum Horizont (1) verlaufen, und daß jeder Streifen (11 bis 18) einem vorgegebenen Nickwinkel entspricht.

2. Verfahren nach Anspruch 1, wobei der vorgegebene Nickwinkel 10° beträgt.

3. Verfahren nach einem der Ansprüche 1 oder 2, wobei oberhalb eines vorgegebenen maximalen Nickwinkels eine Warnfarbe erscheint.

4. Verfahren nach einem der vorhergehenden Ansprüche, wobei ferner numerische, vorzugsweise zwei, Anzeigen (21, 22) des Nickwinkels eingeblendet sind, die in einer gedachten Verlängerung der Ebene des Flugzeugs dargestellt sind, wobei die Anzeigen (21, 22) transparent sind.

5. Verfahren nach Anspruch 4, wobei die Anzeigen (21, 22) Ziffern innerhalb eines Rahmens sind, wobei der jeweilige Hintergrund, Himmel oder Boden in dem nicht von den Ziffern bedeckten Teil des Rahmens sichtbar ist.

6. Verfahren nach einem der vorhergehenden Ansprüche, wobei vertikale Ablagen von einem im Flugraum dargestellten Sollflugpfad (32 bis 35) in den senkrechten Begrenzungsflächen eines den Sollflugpfad umfassenden Sollweg-Kanals als farbliche Markierungen (39) angezeigt werden.

7. Verfahren nach Anspruch 6, wobei die Markierungen (39) Linien sind, die parallel zu den Begrenzungskanten des Sollweg-Kanals verlaufen.

8. Verfahren nach einem der vorhergehenden Ansprüche, wobei bei Zusammenfallen der Spitze der vorausberechneten Flugbahn mit ihrem Schatten das jeweilige die vorausberechnete Flugbahn darstellende Symbol die Lage des auf den Boden fallenden Schattens einnimmt.

9. Verfahren nach einem der vorhergehenden Ansprüche, wobei die auf den Boden projizierte vorausberechnete Flugbahn (23, 24) durchsichtig ausgeführt ist.

## Claims

1. A method of representing flight guidance information of an aircraft, wherein a spatial representation of the airspace. comprising at least one horizon (1) and the precalculated flight path (10) of the aircraft, is effected with the aid of an image reproduction device, characterised in that the area above the horizon (10), which is preferably displayed in blue, is subdivided into strips (11 to 18) of different hues which run parallel to the horizon (1), and that each strip (11 to 18) corresponds to a predetermined pitch angle.

2. A method according to claim 1, wherein the predetermined pitch angle is 10°.

3. A method according to either one of claims 1 or 2, wherein a warning colour appears above a predetermined maximum pitch angle.

4. A method according to any one of the preceding claims, wherein numerical, preferably two, indications (21, 22) of the pitch angle are superimposed in addition, and are displayed in an imaginary extension of the plane of the aircraft, wherein the indications (21, 22) are transparent.

5. A method according to claim 4, wherein the indications (21, 22) are figures inside a frame, wherein the respective background (sky or ground) is visible in the part of the frame which is not covered by the figures.

6. A method according to any one of the preceding claims, wherein vertical deviations from a scheduled flight path (32 to 35) displayed in the air space are indicated as coloured marks (39) in the vertical delimiting faces of a scheduled path channel comprising the scheduled flight path.

7. A method according to claim 6, wherein the marks (39) are lines which run parallel to the delimiting edges of the scheduled path channel.

8. A method according to any one of the preceding claims, wherein when the tip of the precalculated flight path coincides with its shadow the respective symbol which represents the precalculated flight path assumes the position of the shadow falling on the ground.

9. A method according to any one of the preceding claims, wherein the precalculated flight path (23, 24) which is projected on to the ground is of transparent form.

## Revendications

1. Procédé de représentation d'informations de guidage d'un avion, dans lequel, à l'aide d'un dispositif de reproduction d'image, il se fait une représentation spatiale de l'espace de vol, comportant au moins un horizon (1) et la trajectoire de vol estimée (10) de l'avion, caractérisé par le fait que la surface située au-dessus de l'horizon (10), et qui de préférence est représentée en bleu, est divisée en bandes (11 à 18) de différentes nuances qui sont orientées parallèlement à l'horizon (1) et que chaque bande (11 à 18) correspond à un angle donné d'inclinaison longitudinale.

2. Procédé selon la revendication 1, dans lequel l'angle d'inclinaison longitudinal donné vaut 10°.

3. Procédé selon l'une des revendications 1 ou 2, dans lequel une couleur d'avertissement apparaît au-dessus d'un angle d'inclinaison longitudinale maximal donné.

4. Procédé selon l'une des revendications précédentes, dans lequel sont en outre superposées des indications numériques, de préférence deux (21, 22) de l'angle d'inclinaison longitudinale, indications qui sont représentées dans un prolongement imaginaire du plan de l'avion, les indications (21, 22) étant transparentes.

5. Procédé selon la revendication 4, dans lequel les indications (21, 22) sont des chiffres à l'intérieur d'un cadre, l'arrière-plan respectif (ciel ou sol) étant visible dans la partie du cadre non recouverte par les chiffres.

6. Procédé selon l'une des revendications précédentes, dans lequel des projection verticales (32 à 35) d'une route prescrite, représentée dans l'espace aérien, sont indiquées, sous forme de repères colorés (39), dans les surfaces limites verticales d'un couloir aérien prescrit contenant la route prescrite.

7. Procédé selon la revendication 6, dans lequel les repères (39) sont des lignes qui sont orientées parallèlement aux limites du couloir aérien prescrit.

8. Procédé selon l'une des revendications précédentes, dans lequel, lors de la coïncidence de la pointe de la trajectoire de vol estimée avec son ombre, le symbole en question, représentant la trajectoire de vol estimée, prend la position de l'ombre projetée sur le sol.

9. Procédé selon l'une des revendications précédentes, dans lequel la trajectoire de vol estimée (23, 24) projetée sur le sol est réalisée transparente.
